# EUROPÄISCHE PATENTSCHRIFT

(11) **EP 2 326 823 B1**
(45) Veröffentlichungstag und Bekanntmachung des Hinweises auf die Patenterteilung: **14.11.2012**
(21) Anmeldenummer: 09781718.3
(22) Anmeldetag: 12.08.2009
(51) Int. Cl.: F02M 25/07, B01D 39/20

(54) **PARTIKELABFANGVORRICHTUNG FÜR EINE ABGASRÜCKFÜHRLEITUNG**
PARTICLE TRAP FOR AN EXHAUST GAS RECIRCULATION LINE
DISPOSITIF D'INTERCEPTION DES PARTICULES POUR UNE CONDUITE DE RETOUR DES GAZ D'ÉCHAPPEMENT

(30) Priorität: 13.08.2008 DE 102008038983
(43) Veröffentlichungstag der Anmeldung: 01.06.2011
(73) Patentinhaber: Emitec Gesellschaft für Emissionstechnologie mbH, 53797 Lohmar (DE)
(72) Erfinder: KOTTHOFF, Hubertus, 53809 Ruppichteroth (DE); SITTIG, Joachim, 51503 Rösrath (DE); CASPER, Hans-Peter, 53844 Troisdorf (DE); SIEPMANN, Uwe, 51491 Overath (DE)
(74) Vertreter: Rössler, Matthias
(86) Internationale Anmeldenummer: PCT/EP2009/060401
(87) Internationale Veröffentlichungsnummer: WO 2010/018183

(56) Entgegenhaltungen:
- EP-A- 1 936 175
- DE-A1- 3 731 766
- DE-A1- 3 919 533
- DE-A1-102005 028 031
- US-A- 3 815 337
- US-A- 4 055 158
- US-A1- 2005 126 138
- US-A1- 2005 178 111
- US-A1- 2007 151 231
- US-B1- 6 301 887

## Beschreibung

Die Erfindung betrifft eine Partikelabfangvorrichtung, die im Übergangsbereich von einer Abgasleitung hin zu einer Abgasrückführleitung angeordnet ist. Derartige Partikelabfangvorrichtungen werden insbesondere in Abgassystemen von (mobilen) Verbrennungsmaschinen eingesetzt.

Bei der Abgasbehandlung von mobilen Verbrennungsmaschinen, wie z. B. Otto - und Diesel-Motoren, ist man heute bestrebt, Abgase derart aufzubereiten, dass diese praktisch vollständig gereinigt an die Umwelt abgegeben werden können. Diese Nachbehandlung kann z. B. dadurch geschehen, dass die Abgase in einem Katalysator und/oder in einem Filter gereinigt werden. Es ist auch bekannt einen Teil des produzierten Abgases wieder in die Verbrennungskraftmaschine rückzuführen. Das bedeutet, dass ein Teil der Abgase aus der Abgasleitung entnommen wird und über eine Abgasrückführleitung zurück zur Ansaugseite der Verbrennungsmaschine transportiert wird, um mit der Ansaugluft gemeinsam in den Brennraum der Verbrennungskraftmaschine eingeführt zu werden. Besondere Anforderung stellt die Reinigung von Abgasen eines Diesel-Motors, welche nicht verbrannte Kohlenstoffpartikel, häufig auch Rußpartikel genannt in größerem Umfang aufweisen. Ein wichtiges Ziel der Abgasreinigung ist, diese Kohlenstoff- bzw. Rußpartikel aus dem Abgas eines Diesel-Motors zu entfernen. Auch bei der Rückführung von Abgas in die Verbrennungskraftmaschine können sich Rußpartikel negativ auswirken. Ziel einer Partikelabfangvorrichtung zwischen Abgasleitung und Abgasrückführleitung ist es deswegen, die Rückführung von Kohlenstoff- bzw. Rußpartikeln zu verhindern, sowie gegebenenfalls auch andere Festkörper zurückzuhalten. Außerdem hat die Abgasrückführung auch Einfluss auf die Produktion bzw. Konvertierung von Stickoxiden.

Teilweise werden in Abgasleitungen auch so genannte Rußabbrennfilter eingesetzt, um Rußpartikel aus dem Abgas zu entfernen. Diese Rußabbrennfilter sind häufig aus keramischen Werkstoffen gefertigt. Häufig werden poröse, gesinterte Keramikfilter eingesetzt ("wall flow filter"). Keramikfilter zeichnen sich ohnehin schon durch eine große Sprödigkeit aus. Durch die unterschiedlichen Temperaturen beim Einsatz in einer Abgasleitung wird dieses Verhalten weiter unterstützt. Es kann leicht passieren, dass sich aus einem Keramikfilter oder eine den Keramikfilter umgebende Lagermatte kleine Partikel lösen. Werden solche Festkörper durch eine Abgasrückführleitung zurück in den Brennraum einer Verbrennungskraftmaschine geführt, können sie dort erheblichen Schaden anrichten. Die keramischen Partikel verhalten sich dort wie Schmirgelkörper und können so zu erheblichem Verschleiß an Motorbauteilen führen.

Eine in der Abgasrückführleitung angeordnete Filtereinrichtung ist in der Lage, Partikel aus dem zurück geführten Abgas zu entfernen. Nachteil einer solchen Filtereinrichtung ist es jedoch, dass diese durch die Partikel verstopfen kann. Einmal von einer solchen Filtereinrichtung abgefangene Partikel werden durch das nachströmende Abgas weiter in der Filtereinrichtung gehalten. Dadurch können sich die Eigenschaften der Filtereinrichtung erheblich ändern. Die Durchlässigkeit des Filters reduziert sich beispielsweise, so dass ein unerwünschtes Druckgefälle über den Filter entstehen kann. Druckgefälle und Durchlässigkeit haben wiederum Einfluss auf die Menge des zurück geführten Abgases. Zur Aufrechterhaltung von über die Zeit konstanten Filtereigenschaften ist somit eine regelmäßige Reinigung der Filtereinrichtung notwendig.

Um eine regelmäßige Reinigung der Filtereinrichtung zu umgehen, ist es aus der DE 38 33 957 Al bekannt, einen Abgasfiltereinsatz direkt in der Abzweigstelle zwischen einer Abgasleitung und der Abgasrückführleitung anzuordnen. Der Abgasfiltereinsatz ist dabei so angeordnet, dass die Oberfläche parallel zur Strömungsrichtung des Hauptabgasstroms verläuft. Weiter wird dort angegeben, dass der Abgasfiltereinsatz aus einer porösen Sinterkeramik oder aus einem Sintermetall herzustellen ist. Eine typische Porosität für eine solche Filtereinrichtung kann zwischen 0,1 und 10 Mikrometer betragen.

Aus der DE 10 2006 013 709 Al ist zudem bekannt, eine Querschnittserweiterung in einer Abgasrückführleitung vorzusehen und in dieser Querschnittserweiterung eine Sieblage vorzuhalten. So kann der Druckverlust im Abgasstrom durch die Filterung klein gehalten werden.

Die DE 39 19 533 Al offenbart einen Rußabbrennfilter aus Keramikmaterial für einen Dieselmotor mit Abgasrückführung und/oder Abgasturboaufladung mit einem mechanischen Nachfilter für das zurückzuführende Abgas, welcher ein hitzebeständiges Metallgewebe mit einem Porendurchmesser von weniger als 1 Mikrometer aufweist.

Hiervon ausgehend ist es Aufgabe der hier vorliegenden Erfindung, die im Zusammenhang mit dem Stand der Technik geschilderten technischen Probleme weiter zu lindern. Es soll insbesondere eine besonders kostengünstige Vorrichtung zum Abfangen von Partikeln vor einer Abgasrückführleitung vorgestellt werden.

Diese Anfgaben werden gelöst mit einer Vorrichtung gemäß den Merkmalen des Patentanspruchs 1. Weitere vorteilhafte Ausgestaltungen der Vorrichtung sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden wobei weitere Ausführungsvarianten der Erfindung aufgezeigt werden.

Die Erfindung betrifft eine Partikelabfangvorrichtung zwischen einer Abgasleitung mit einem Strömungsverlauf in einer ersten Hauptrichtung und einer Abgasrückführleitung, wobei die Abgasleitung einen ersten mittleren Querschnitt und einen ersten vergrößerten Querschnitt aufweist. Mindestens ein teilweise durchlässiger Hohlkörper ist in dem ersten vergrößerten Querschnitt angeordnet, wobei der mindestens eine teilweise durchlässige Hohlkörper mit seiner Wandung eine Primärform mit einem Innenraum definiert, der zwei gegenüberliegende offene Seiten hat, und so angeordnet ist, dass dieser axial von einer Seite angeströmt wird. Die Wandung ist gasdurchlässig, wobei als Wandung ein Vlies nach Art eines Siebes verwendet wird, welches eine Dicke zwischen 0,4 Millimeter und 0,5 Millimeter aufweist. Die Wandung weist eine die Primärform überlagernde kleinere Sekundärstruktur mit Erhebungen und Vertiefungen auf, die in axialer Richtung geradlinig, länglich und über die gesamte axiale Ausdehnung des Hohlkörpers ausgebildet sind und parallel zu der ersten Hauptrichtung der Abgasleitung verlaufen. Dabei stellt die Sekundärstruktur eine Abweichung vom Querschnitt der Primärform quer zum Verlauf der Wandung in Umfangsrichtung dar. Die Wandung des teilweise durchlässigen Hohlkörpers stellt hierbei die strömungstechnische Grenze zwischen der Abgasströmung der Abgasleitung und der Abgasströmung, die durch die Abgasrückführleitung zurück geführt wird, dar.

Üblicher Weise sind solche Abgasanlagen so aufgebaut, dass diese einen Leitungsabschnitt aufweisen, bei dem die Abgasrückführleitung an die Abgasleitung angeflanscht ist oder dort mit einer Schweißnaht verbunden ist. Insoweit kann diese Vorrichtung z. B. auch eine Art T-Stück der Abgasanlage umfassen.

Der zumindest teilweise durchlässige Hohlkörper ist regelmäßig so aufgebaut, dass dieser eine (bevorzugt vollständig) vom Abgas durchströmbare Wandung hat. Diese Wandung stellt hierbei insbesondere die strömungstechnische Grenze zwischen der Abgasströmung der Abgasleitung und der Abgasströmung, die durch Abgasrückführleitung zurück geführt wird. Die Wandung des teilweise durchlässigen Hohlkörpers umfasst demnach ein permeables Material, welches dem Hohlkörper seine Durchlässigkeit verleiht. Ganz besonders bevorzugt ist die Ausgestaltung des Hohlkörpers nach Art eines Radial-Siebes. Dabei ist auch vorteilhaft, wenn die Wandung des Hohlkörpers formstabil ist, also ihre Primärform selbst beibehält. In diesem Zusammenhang wird als vorteilhaft angesehen, dass die Wandung mit zumindest einem Gewirr, einem Geflecht oder einem gesintertes Material aus, insbesondere metallischen, temperaturbeständigen Werkstoffen aufgebaut ist. Ganz besonders bevorzugt ist der Einsatz zumindest eines Vlies mit (asymmetrisch) gewebten Drahtfilamenten, wobei die Drahtfilamente miteinander versintert sind.

Mit der "Primärform" des durchlässigen Hohlkörpers ist hier eine geometrische Form gemeint, die im Wesentlichen die Gestalt des Hohlkörpers ausmacht. Damit bildet die Primärform also die Gestalt des Hohlkörpers ab, so dass insbesondere mindestens 80% oder sogar 95% des Volumens des Hohlkörpers in dieser Primärform erfasst ist. Bevorzugt kommen röhrenförmige Primärformen zum Einsatz. Dabei ist ein röhrenförmiger Hohlkörper mit kreisrundem Querschnitt bevorzugt, ggf. sind aber auch ovale, dreieckige, quadratische, rechteckige oder polygonförmige Querschnitte als Primärform des mindestens einen teilweise durchlässigen Hohlkörpers möglich.

In den meisten Fällen wird der Hohlkörper axial von zumindest einer Seite angeströmt, so dass insbesondere eine offene Seite vorgesehen sein muss, damit das Abgas in den von der Wandung definierten Innenraum eingeleitet werden kann. Je nach der Primärform des Hohlkörpers und/oder der Anordnung des Hohlkörpers in der Abgasanlage kann auch die zweite (strömungstechnisch gegenüberliegende) Seite offen sein, es ist aber auch möglich, dass diese (strömungstechnisch) verschlossen ist, so dass dann regelmäßig all das in den Innenraum eintretende Abgas über die Wandung den Innenraum wieder verlässt.

Neben der Primärform hat der Hohlkörper noch eine die Primärform überlagernde kleinere Sekundärstruktur. Mit einer "Sekundärstruktur" ist hier insbesondere eine (periodische und/oder regelmäßige) Abweichung vom Querschnitt der Primärform quer zum Verlauf der Wandung (Umfangsrichtung) gemeint, z. B. nach radial außen, auch Erhebungen genannt, und/oder nach radial innen, auch Vertiefungen genannt gemeint. Es können beispielsweise gewellte, gefaltete, geknickte und/oder mäanderförmige Abweichungen vorgesehen sein. Besonders bevorzugt verlaufen Erhebungen und/oder Vertiefungen über die gesamte axiale Ausdehnung der Primärform des teilweise durchlässigen Hohlkörpers bzw. der Wandung, so dass in axiale Richtung (gradlinig) längliche Erhebungen und/oder Vertiefungen ausgeformt sind.

Die Sekundärstruktur des mindestens einen teilweise durchlässigen Hohlkörpers erhöht dessen Festigkeit der Partikelabfangvorrichtung. Die hier vorgeschlagene Partikelabfangvorrichtung mit einer Sekundärstruktur kann bei erheblich geringerer Dicke deutlich höhere Druckgefälle ertragen. Außerdem wird die Oberfläche zur Ablagerung der Partikel vergrößert. Zudem ist auch zu berücksichtigen, dass mit der Sekundärstruktur gezielt Mikroströmungen an der Oberfläche bzw. in die Wandung hinein erzeugt werden können, die (z. B. in Abhängigkeit der Strömung des Abgases (Geschwindigkeit, Massendurchsatz, etc.)) eine vorbestimmte Menge des zurück zu führenden Abgasmassenstromes und/oder eine vorbestimmte Einlagerungscharakteristik der Partikel und/oder eine vorbestimmte Reinigungscharakteristik für die Partikelabfangvorrichtung (bzw. die Wandung) realisieren können. Damit lassen sich mit dieser einfach aufgebautes Vorrichturg über den dauerhaften Schutz der Komponenten der Abgasrückführung und die Reinigung von Abgasen hinaus weitere signifikante Vorteile einstellen.

Die Abgasleitung weist einen ersten mittleren Querschnitt und einen, gegenüber dem ersten mittleren Querschnitt erweiterten, ersten vergrößerten Querschnitt auf wobei hier der mindestens eine teilweise durchlässige Hohlkörper in diesem ersten vergrößerten Querschnitt angeordnet ist. Damit kann insbesondere erreicht werden, dass der Hohlkörper oder seine Wandung nicht direkt angeströmt wird, sondern dieser z. B. in einem vom ersten vergrößerten Querschnitt gebildeten Strömungsschatten positioniert ist. Auf diese Weise lässt sich ggf. auch eine indirekte Einstellung des Abgasrückführrate erreichen, indem mit steigendem Druck in der Abgasleitung eine verstärkte Strömung hin in diesen "Strömungsschatten" und damit auch durch den Hohlkörper bin zur Abgasrückführleitung festgestellt wird.

Gerade in diesem Zusammenhang wird auch als vorteilhaft angesehen, dass der mindestens eine teilweise durchlässige Hohlkörper im Bereich des ersten vergröβerten Querschnitts mit Steckringbefestigungen an der Abgasleitung befestigt sein. Besonders vorteilhaft ist es, wenn in der Abgasleitung bzw. in der Erweiterung der Abgasleitung im Bereich der Partikelabfangvorrichtungen Steckringverbindungen ausgebildet sind, in welche die (offenen) Seiten des durchlässigen Hohlkörpers direkt formschlüssig eingreifen können. Solche Steckverbindungen können z. B. bei der Herstellung eines Abzweigbauteils durch Stanzen oder Tiefziehen direkt vorgesehen werden. Durch die Anordnung der Steckringbefestigungen im Strömungsschaiten werden ebenfalls strömungstechnische Vorteile für die Hauptabgasströmung (geringerer Druckabfall) und eine geringere Verschmutzung erreicht, so dass auch ein Wechsel des Hohlkörpers unproblematisch ist

In einer weiteren, nicht erfindangugemäßen Ausführungsform kann auch die Abgasrückführleitung einen zweiten mittleren Querschnitt und einen zweiten vergrößerten Querschnitt aufweisen, wobei der mindestens eine teilweise durchlässige Hohlkörper in dem zweiten vergrößerten Querschnitt angeordnet ist. Im Hinblick auf die Vorteile dieser Bauart sei auf die vorstehenden Anmerkungen verwiesen, wobei hier zu berücksichtigen ist, dass aufgrund der kleineren Abgasströme hier ggf. Strömongsverluste und/oder Verstopfungen eine signifikant größere Rolle spielen können.

Auch eine kombinierte Anordnung, bei der (jeweils) ein durchlässiger Hohlkörper in dem ersten vergrößerten Querschnitt der Abgasleitung sowie in dem zweiten vergrößerten Querschnitt der Abgasrückführleiftung angeordnet ist, ist grundsätzlich möglich, wobei dann ggf. unterschiedliche Ausprägungen der Hohlkörper vorliegen sollten (z. B. hinsichtlich Durchlässigkeit, Stabilität, etc.).

Gegebenenfalls ist bei nicht erfindungsgemäßen Ausführungsformen auch wöglich dass eine offene Seite des mindestens einen teilweise durchlässigen Hohlkörpers durch eine Kappe verschlossen ist. Damit kann ggf. die Herstellung vereinfacht werden, indem ein rohrähnlicher Hohlkörpers mit zwei offenen Seiten bereitgestellt wird, an dessen Wandung auf der einen Seite eine undurchströmbare, separate, Kappe angebracht wird (z. B. angeschweißt). Außerdem ist auch möglich, dass die (insbesondere metallische) Kappe einen gezielten Bypass hat, also z. B. ein kleines Loch aufweist. Dann kann die Kappe ggf. auch beiden Seiten angebracht sein, wobei eine mit und eine ohne Bypass-Funktion ausgeführt ist. Mit der Kappe kann neben der Strömungsführung auch die Stabilität der Primärform eingestellt werden.

Auβerdem verlaufen die Erhebungen und Vertiefungen der Sekundärstruktur parallel zu einer ersten Hauptrichtung der Abgasleitung. Dadurch kann der Abgasstrom (lastabhängig) ohne großen Strömungswiderstand durch die Vertiefungen der Sekundärstruktur hindurch strömen und reinigt diese somit von abgelagerten Kohlenstoff- bzw. Ruß- oder Keramikpartikeln.

Die Wandung des mindestens einen, teilweise durchlässigen Hohlkörpers ist bevorzugt aus mindestens einer Lage mit Erhebungen und Vertiefungen gebildet, wobei die mindestens eine Lage mit sich selbst einen Überlappungsbereich ausbildet, in dem die Erhebungen und die Vertiefungen formschlüssig ineinander greifen. Unter einer Lage wird dabei z. B. ein flächiges Filter- oder Siebmaterial verstanden, wobei grundsätzlich auch mehrere (und ggf. verschiedene) zum Aufbau der Wandung vorgesehen sein können. Diese Lage kann zu einer Primärform mit zwei offenen Seiten gelegt werden, so dass sie mit sich selbst einen Überlappungsbereich ausbildet. Die Erhebungen und Vertiefungen der Lage können so formschlüssig ineinandergreifen, wenn die Lage unter Bildung des Innenraums aufgewickelt wird. So wird ein stabiler röhrenförmiger Hohlkörper gebildet, ohne dass stoffschlüssige Verbindungen im Überlappungsbereich ausgebildet werden müssten. Die Stabilität ist insbesondere dann gegeben, wenn ein solcher Hohlkörper an den Rändern seiner offenen Seiten an Abgasleitung oder Abgasrückführleitung stoffschlüssig fixiert wird.

Die Steifigkeit eines solchen Hohlkörpers kann zusätzlich dadurch erhöht werden, dass zumindest eine Stützlage vorgesehen ist, die eine der Sekundärstruktur des mindestens einen Hohlkörpers entsprechende Gestalt hat. Grundsätzlich wäre zwar möglich, dass der Hohlkörper und die ihn zumindest teilweise umgebende Stützlage oberflächlich nur anliegen, eine (stoffschlüssige) Verbindung beider ist allerdings bevorzugt. Die oberflächlichen Strukturen des Hohlkörpers und der Stützlage z. B. mit Erhebungen und Vertiefungen, können dann formschlüssig ineinander greifen. Grundsätzlich kann die mindestens eine Stützlage den Hohlkörper von innen und/oder außen abstützen, ggf. ist auch eine Integration in eine Mehrzahl von Lagen aus Filtermaterial und/oder Siebmaterial möglich. Ob eine Unterstützung von innen oder außen vorgezogen ist, ist abhängig von der Wirkungsrichtung eines möglichen Druckgefälles. Die Stützlage sollte so vorgesehen werden, dass das Druckgefälle die Lage gegen die Stützlage drückt.

Bei der Partikelabfangvorrichtung wird bevorzugt eine Wandung mit Maschen von bis zu 0,3 mm eingesetzt. Die Weite der Maschen liegt bevorzugt im Bereich kleiner 0,2 mm und ganz besonders bevorzugt im Bereich von 0,05 mm bis 0,15 mm.

Die Erfindung findet insbesondere Einsatz in einem Automobil mit einer Verbrennungskraftmaschine und einer Abgasanlage, die mindestens eine hier erfindungsgemäß beschriebene Partikelabfangvorrichtung aufweist, wobei eine erste Strömungsrichtung durch die Abgasrückführleitung zur Verbrennungskraftmaschine existiert und die Partikelabfangvorrichtung so angeordnet ist, dass die erste Strömungsrichtung in der Abgasrückführleitung unmittelbar nach der Partikelabfangvorrichtung der Schwerkraft entgegengesetzt verläuft. Das heißt mit anderen Worten insbesondere, dass die Abgasrückführleitung bzw. der Übergangsbereich mit dem Hohlkörper so der Schwerkraft aufgesetzt ist, dass von dort Partikel und dergleichen selbständig wieder heraus fallen, nämlich insbesondere wieder in die Abgasleitung zurück und von dort aus weiter in die stromabwärts angeordneten Abgasreinigungskomponenten des Abgasleitung. Ganz besonderes bevorzugt ist hierbei, dass der Hohlkörper selbst eine Zentrumsachse hat, die im Wesentlichen parallel zur Schwerkraft ausgerichtet ist. So kann die Schwerkraft der Ablagerung von Ruß- und/oder Keramikpartikeln auf der Partikelabfangvorrichtung zusätzlich entgegenwirken.

Gemäß einer Weiterbildung der Erfindung wird auch als vorteilhaft angesehen, wenn ein Automobil mit einer Verbrennungskraftmaschine und einer Abgasanlage ausgeführt ist, die mindestens eine erfindungsgemäße Partikelabfangvorrichtung und mindestens einen Keramikfilter aufweist, wobei eine zweite Strömungsrichtung durch die Abgasleitung weg von der Verbrennungskraftmaschine existiert und mindestens ein Keramikfilter in zweiter Strömungsrichtung vor der Partikelabfangvorrichtung angeordnet ist.

Außerdem ist die Abgasrückführleitung bevorzugt Teil eines Niederdruck-EGR-Systems (exhaust gas recirculation), bei dem die Abgasanlage also mit wenigstens einem Turbolader ausgeführt ist und die Abgasrückführleitung in zweiter Strömungsrichtung gesehen hinter dem Turbolader angeordnet ist.

Ggf. kann der hier beschriebene Hohlkörper als Abgasreinigungseinheit auch unabhängig von der konkreten Anordnung in der Abgasanlage bzw. in der Abgasrückführleitung vorteilhaft sein. Ein solches Vlies zur Behandlung von Abgasen in einer Abgasrückführungsleitung soll hier kurz dargestellt werden, wobei dieses auch unabhängig von der Anordnung, wie sie hier beansprucht ist, vorteilhaft zum Einsatz gelangen kann - z. B. auch in einer Ausgestaltung, wie sie in der DE 10 2006 013 709 A1 angegeben ist, die hier zur Beschreibung der Anordnung auch ergänzend in Bezug genommen wird.

Demnach ist das Vlies ein Gewebe nach Art eines 3-Schaft-Körpergewebes oder 5-Schaft-Körpergewebes (so genanntes "Atlasgewebe", TELA-Gewebe oder Gewebe mit einer 5-Schaft-Atlas-Bindung). Ein derartiges Vlies weist Kett-Filamente und Schuss-Filamente auf, die in.einem Winkel von ca. 90° zueinander verwoben sind. Im Vlies wird im Folgenden die Richtung entlang der Kett-Filamente als Kettrichtung und die Richtung entlang der Schuss-Filamente als Schussrichtung bezeichnet. Die Verwebung von Kett-Filamenten und Schuss-Filamenten erfolgt bei einem solchen Gewebe derart, dass die Schuss-Filamente jeweils oberhalb vier aufeinander liegender Kett-Filamente und anschließend unterhalb eines einzelnen Kett-Filamentes verlaufen. Dieser Verlauf wiederholt sich für jedes Schuss-Filament über das gesamte Vlies. Zwei nebeneinander liegende Schuss-Filamente verlaufen jeweils unterhalb unterschiedlicher Kett-Filamente. Bevorzugt ist dabei, dass ein Schuss-Filament jeweils unterhalb des übernächsten Kett-Filamentes verläuft unterhalb dessen das direkt benachbart liegende Schuss-Filament verläuft. Durch diese Anordnung ergibt sich ein regelmäßig wiederholtes schräg zu Schussrichtung und schräg zur Kettrichtung verlaufendes-Muster im Vlies. Das derart gewobene Vlies ist besonders robustes und weist eine relativ glatte Oberfläche auf.

Durch diese Gewebeart kann ein hoher Durchfluss bei gleichzeitiger Stabilität erreicht werden. Hierbei werden (als Kett- und Schuss-Filamente verwendete) Drahtfilamente unterschiedlicher Ausgestaltung eingesetzt, nämlich dickere Kett-Filamente (z. B. 160 µm Filamentdurchmesser) und dünnere Schuss-Filamente (z. B. 150 µm Filamentdurchmesser). Für die Filamentdurchmesser ist jeweils eine Toleranz von +/- 4 µm sinnvoll, so dass Kett-Filamente einen Durchmesser von mindestens 156 µm und maximal 164 µm aufweisen und Schuss-Filamente einen Durchmesser von mindestens 146 µm und maximal 154 µm aufweisen. Im fertigen Gewebe verbiegen sich die dünneren Schuss-Filamente stärker als die dickeren Kett-Filamente. Dies beeinflusst die Form der vorliegenden Maschen.

Ein derartiges Vlies weist rechteckförmige Maschen auf, die in Schussrichtung eine größere Maschenweite haben als in Kettrichtung. Die Maschenweite sollte in Kettrichtung im Mittel bevorzugt ca. 77 µm betragen. Hierbei ist eine Toleranz von +/- 6 µm sinnvoll. Erfindungsgemäß ist demnach eine mittlere Maschenweiten in Kettrichtung von mindestens 71 µm und maximal 83 µm. In Schussrichtung sollte die Maschenweite im Mittel bevorzugt 149 µm betragen. Hierbei ist eine Toleranz von +/- 10 µm sinnvoll. Erfindungsgemäß ist demnach eine mittlere Maschenweiten in Schussrichtung von mindestens 139 µm und maximal 159 µm.

Aus bevorzugter Maschenweite und bevorzugtem Filamentdurchmesser ergibt sich in Kettrichtung eine Maschenzahl von 107 Maschen/Zoll bzw. ca. 41 Maschen/mm und in Schussrichtung eine Maschenzahl von 85 Machen/Zoll bzw. ca. 33 Maschen/mm.

Darüber hinaus ist es sinnvoll, sowohl in Kettrichtung als auch in Schussrichtung eine maximale Maschenweite zu definieren, um sicherzustellen, dass Partikel ab einer gewissen Größe das Vlies generell nicht passieren können. Als Toleranz für die größte zulässige Maschenweite in Kettrichtung werden 58 µm vorgeschlagen. Eine Masche darf in Kettrichtung somit maximal eine Maschenweite von 135 µm aufweisen. Als Toleranz für die größte zulässige Maschenweite in Schussrichtung werden 84 µm vorgeschlagen. Eine Masche darf in Schussrichtung somit maximal eine Maschenweite von 233 µm aufweisen.

Die Eigenschaften eines derartigen Vlieses können beispielsweise mit Hilfe eines Mikroskops überprüft werden. Die Anzahl der Filamente je Längeneinheit in Kettrichtung oder Schussrichtung kann ermittelt werden, indem die Filamente je Längeneinheit gezählt werden. Die mittlere Maschenweite kann dann bestimmt werden, indem der Filamentdrahtdurchmesser von der Teilung (Abstand zweier Filamente im Vlies) abgezogen wird.

Die größte zulässige Maschenweite gibt zumindest teilweise die Filterdurchlässigkeit vor. Diese kann mit Hilfe eines Kugeldurchlasstestes bestimmt werden. Als Kugeldurchlass wird die größte Öffnung der Maschen in einem Gewebe (Vlies) bezeichnet. Eine exakt runde Kugel kann das Gewebe noch passieren, eine Größere wird zurückgehalten. Aus der Definition ergibt sich, dass bei einer echteckigen Masche die kleinere der beiden Maschenweiten (Maschenweite in Kettrichtung) den Kugeldurchlass wesentlich bestimmt. Der zulässige Kugeldurchmesser bei einem Test mit dem hier vorgeschlagenen Vlies sollte zwischen 140 µm und 180 µm, vorzugsweise zwischen 150 µm und 170 µm und insbesondere zwischen 155 µm und 160 µm liegen. Der zulässige Kugeldurchlass ist damit größer als die oben angegebene Maschenweite in Kettrichtung. Dies ist der Fall, weil aufgrund der gewebten Struktur des Vlieses und der Filamentdrahtdurchmesser im Verhältnis zu den Maschenweiten sich schräg zur Vliesebene (insbesondere nicht orthogonal zur aus Kettrichtung und Schussrichtung aufgespannten Vliesebene) bei vorgegebener Maschenweite leicht vergrößerte Durchtrittsöffnungen gegenüber der definierten Maschenweiten ergeben.

Die Dicke des Vlieses sollte zwischen 0,4 und 0,5 mm liegen und vorzugsweise ca. 0,44 mm betragen. Das Vlies sollte eine Luftdurchlässigkeit zwischen minimal 4000 l/m²s und maximal 8000 l/m²s, vorzugsweise zwischen minimal 5000 l/m²s und maximal 7000 l/m²s und insbesondere zwischen minimal 5500 l/m²s und maximal 6000 l/m²s aufweisen, wenn der über das Vlies anliegende Druckunterschied 2 mbar beträgt.

Für die Weiterverarbeitung sollte das Vlies frei von Ölfilmen, Hilfsstoffen und anderen Verumeinigungen sein.

Es kann gegebenenfalls auch vorteilhaft sein, ein solches vorstehend beschriebenes Gewebe anders in eine Abgasrückführleitung zu integrieren, so dass diese Kombination ebenfalls separat eine unerwartete Weiterbildung des Standes der Technik bilden kann.

Die Drahtfilamente sind dabei in der verwendeten Form bevorzugt miteinander versintert, also insbesondere nicht miteinander verschweißt.

Als Wandung des Hohlkörpers wird Vlies nach Art eines Siebes verwendet, es kann zumindest durch einen der folgenden Parameter charakterisiert werden:
- Siebfläche von mindestens 50 cm² pro 1,0 Liter Hubraum der Verbrennungskrastmaschine;
- Aufbau (nur) mit 2 verschiedenen Arten von metallischen Drahtfilamente mit unterschiedlichen Dicke, die mit verschiedener Orientierung in einem Vlies mittels einer Sinterverbindung verbunden sind;
- Trenngrad des Siebes von mindestens 0,05 mm, insbesondere 0,1 mm oder sogar 0,25 mm (Partikel mit einem kleineren Durchmesser durchströmen das Sieb regelmäßig);
- Gestalt des Hohlkörpers nach Art eines (abgeflachten) Konus;
- Höhlkörper (mit mindestens einer Kappe und) mit Bypass;
- Material der Wandung (Draht, Drahtfilamente, etc.) mit der Material-Nr. 14841 gemäß deutschem Stahlschlüssel.

Die Maschenweite des Siebes (und/oder des vorstehend beschriebenen Vlies) liegt bevorzugt im Bereich kleiner 0,3 mm, insbesondere kleiner 0,2 mm und ganz besonders bevorzugt kleiner 0,15 mm. Dabei sollte die Maschenweite gleichermaßen bevorzugt zumindest 0,05 mm (Millimeter) betragen.

Die Erfindung sowei das technische Umfeld werden nachfolgend anhand der Figuren näher erläutert Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: eine erste Ausführungsvariante der Erfindung, bei der ein reilweise durchlässiger Hohlkörper in der Abgasleitung angeordnet ist,
- Fig. 2:: eine nicht erfindungsgemäße Ausführungsvariante, bei der ein teilweise durchlässiger Hohlkörper in der Abgasrückführleitung angeordnet ist,
- Fig. 3:: einen aus einer gewellten Lage gebildeten teilweise durchlässigen Hohlkörper,
- Fig. 4:: einen aus einer Lage mit Erhebungen und Vertiefungen gebildeten teilweise durchlässigen Hohlkörper mit einer zusätzlichen Stützlage,
- Fig. 5:: ein Automobil mit einer Abgasanlage, die eine erfindungsgemäße Partikelabfangvorrichhung aufweist, und
- Fig. 6:: eine Ausgestaltung eines Vlies für einen Hohlkörper.

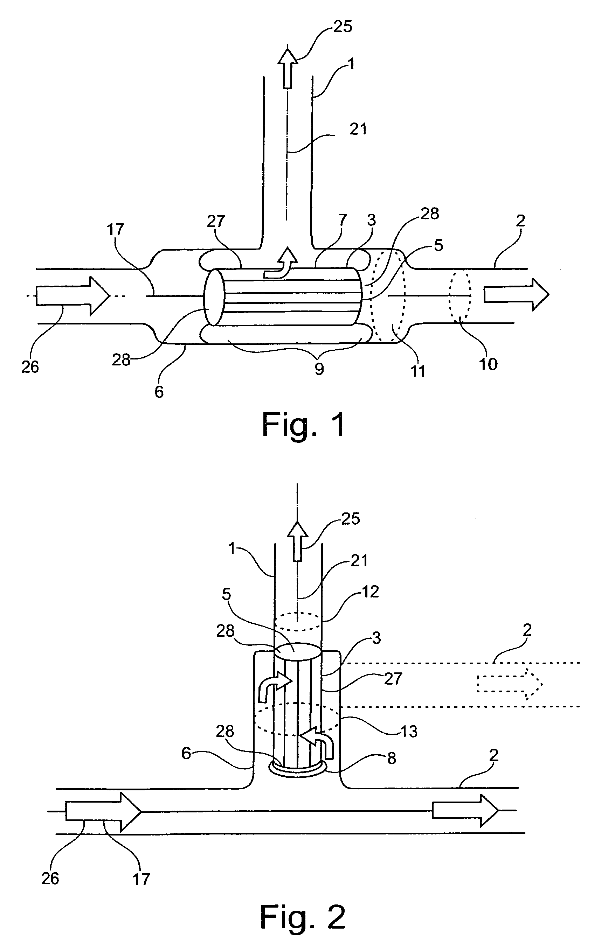

Fig. 1 veranschaulicht schematisch eine erste Ausführungsvariante der erfindungsgemäßen Partikelabfangvorrichtung 6. Eine Abgasleitung 2 weist einen erstem mittleren Querschnitt 10 sowie einen, im Bereich eines Hohlkörpers 3 erweiterten, ersten vergrößerten Querschnitt 11 auf. Durch die Abgasleitung 2 strömt Abgas mit einer zweiten Strömungsrichtung 26 entlang dem Verlauf der Abgasleitung 2. Die Richtung des Verlaufes der Abgasleitung 2 ist auch als die erste Hauptrichtung 17 bezeichnet. Von der Abgasleitung 2 ausgehend zweigt die Abgasrückführleitung 1 ab. Abgas strömt hier mit einer ersten Strömungsrichtung 25 entlang einer zweiten Hauptrichtung 21 der Abgastrükführleitung 1. Die Abgasleitung 2 bildet Steckringverbindungen 9 aus. In den Steckringverbindungen 9 ist ein teilweise durchlässiger Hohlkörper 3 befestigt.

Dieser radial durchlässige Hohlkörper 3 definiert mit seiner Wandung 27 einen Innenraum 5. Der Innenraum 5 hat zwei offene Seiten 28. In Fig. 1 ist der durchlästige Hohlkörper 3 nach Art ein an beiden Seiten offenes Rohr ausgebildet Die Form des Hohlkörpers 3 wird als Primärform 7 bezeichnet. Der durchlässige Hohlkörper 3 ist hier mit der Steckringverbindung 9 stoffschlüssig mit der Abgasanlage und sich selbst verbunden sein. Die Steckringverbindungen 9 können z. B. durch Tiefziehen oder Stanzen direkt bei der Herstellung der Abgasleitung 2 mit vorgesehen werden. Die Primärform 7 des teilweise durchlässigen Hohlkörpers 3 kann in der Abgasleitung 2 so ausgerichtet sein, dass sie entlang der ersten Hauptrichtung 17 verläuft. So setzt der teilweise durchlässige Hohlkörper 3 mit seinen zwei offenen Seiten 28 den Verlauf der Abgasleitung 2 fort.

Fig. 2 zeigt eine nicht erfindungsgemäße Ausgestaltung einer Partikelabfangvorrichtung 6. Auch hier sind die erste Strömungsrichtung 25 des Abgases entlang der ersten Hauptrichtung 17 der Abgasleitung 2 und die zweite Strömungsrichtung 26 des Abgases (entlang der zweiten Hauptrichtung 21) maskiert. Hier weist die Abgasrückführleitung 1 im Bereich der Partikelabfangvorrichtung 6 einen gegenüber einem zweiten mittleren Querschnitt 12 erweiterten zweiten vergrößerten Querschnitt 13 auf. Ein als Rohr ausgeführter, teilweise durchlässiger Hohlkörper 3 ist im zweiten vergrößerten Querschnitt 13 vorgesehen. Der teilweise durchlässige Hohlkörper 3 weist wieder eine Wandung 27, die einen Innenraum 5 umschließt, sowie zwei offenen Seiten 28 auf. Eine offene Seite 28 des teilweise durchlässigen Hohlkörpers 3 ist durch eine Kappe 8 (gasdicht) verschlossen.

Im Übrigen ist in Fig. 2 auch eine kumulative oder alternative Gestalt der Abgasführung angedeutet. So ist es auch möglich, das Abgas nicht geradlinig über die Abgasleitung 2 weiter zu führten, sondern es kann auch eine mehrfache Umlenkung vorgenommen werden, nach der das (gesamte) Abgas zunächst in den vergrößerten Querschnitt 13 umgeleitet wird. Von dort ausgehend wird der Teil der Abgase, der die Partikelabfangvorrichtung 6 nicht durchströmt wieder in die Abgasleitung 2 eingeleitet. Die mehrfache Umlenkung hat zur Folge, dass auch in diesem Fall eine innige Reinigung der Partikelabfangvorrichtung 6 durch das vorbeiströmende Abgas erreicht wird.

Im Rahmen der Erfindung ist auch eine Ausgestaltung der Partikelabfangvorrichtung 6 möglich, bei der sowohl ein teilweise durchlässiger Hohlkörper 3 in der Abgasleitung 2 als auch ein zweiter teilweise durchlässiger Hohlkörper 3 in der Abgasrückführleitung 1 vorgesehen ist. Alle weiteren, für die Ausgestaltungen der Erfindung aus Fig. 1 und aus Fig. 2 getrennt erläuterten, Verbesserungen und Erweiterungen sind im Rahmen der Erfindung auch für diese Kombination einsetzbar.

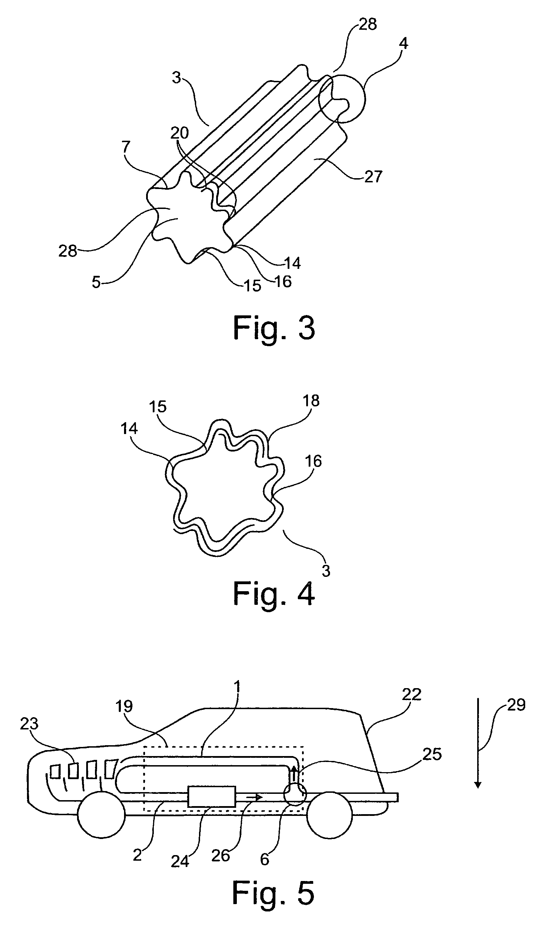

Fig. 3 zeigt perspektivisch einen aus einer gewellten Lage 16 gebildeten teilweise durchlässigen Hohlkörper 3. Die Lage 16 ist zur Wandung 27 einer röhrenförmigen Primärform 7 (hier z. B. eines Zylinders) mit einem Innenraum 5 zusammengelegt und bildet mit sich selbst einen Überlappungsbereich 20 aus. Es ergeben sich zwei offene Seiten 28 der Primärform 7. Außerdem weist die Lage 16 eine von Erhebungen 14 sowie Vertiefungen 15 gebildete Sekundärstruktur 4 auf der Oberfläche bzw. über den Umfang auf. Diese Erhebungen 14 und Vertiefungen 15 der Lage 16 greifen im Überlappungsbereich 20 formschlüssig ineinander. Eine stoffschlüssige Verbindung im Überlappungsbereich 20 ist dadurch nicht unbedingt erforderlich, insbesondere wenn die offenen Seiten 28 des röhrenförmigen Hohlkörpers 3 mit einem Gehäuse, z. B. an Steckringverbindungen 9, an der Abgasleitung 2, verbunden sind.

Fig. 4 zeigt eine weitere Ausgestaltung des röhrenförmigen Hohlkörpers 3, bei dem zusätzlich zu der Lage 16 eine Stützlage 18 zum Einsatz kommt. Erhebungen 14 und Vertiefungen 15 der Lage 16 greifen formschlüssig in eine entsprechende Oberflächengestalt der Stützlage. So kann eine erheblich größere Widerstandsfähigkeit des teilweise durchlässigen Hohlkörpers 3 gegenüber Druckunterschieden zwischen der Innen- und der Außenseite erzielt werden. Die Stützlage 18 kann die Lage 16, je nach wirkendem Druckunterschied zwischen Abgasleitung und Abgasrückführleitung, auch von innen unterstützen.

Fig. 5 zeigt ein Automobil 22 mit einer Verbrennungskraftmaschine 23 und einer Abgasanlage 19. Die Abgasanlage 19 weist einen Keramikfilter 24, insbesondere einen Rußpartikel- oder Rußabbrennfilter, sowie (stromabwärts) eine Partikelabfangvorrichtung 6 auf. Es existiert eine zweite Strömungsrichtung 26 weg von der Verbrennungskraftmaschine 23 durch die Abgasleitung 2 sowie eine erste Strömungsrichtung 25 von der Partikelabfangvorrichtung 6 weg durch die Abgasrückführleitung 1 hin zur Verbrennungskraftmaschine 23. Die Partikelabfangvorrichtung 6 ist in der Abgasanlage 19 derart angeordnet, dass die erste Strömungsrichtung 25 direkt hinter der Partikelabfangvorrichtung 6 bzw. im Bereich der Anordnung des Hohlkörpers der Schwerkraft 29 entgegengesetzt verläuft. So wirkt die Schwerkraft 29 der Ablagerung von Partikeln auf der Partikelabfangvorrichtung 6 zusätzlich entgegen.

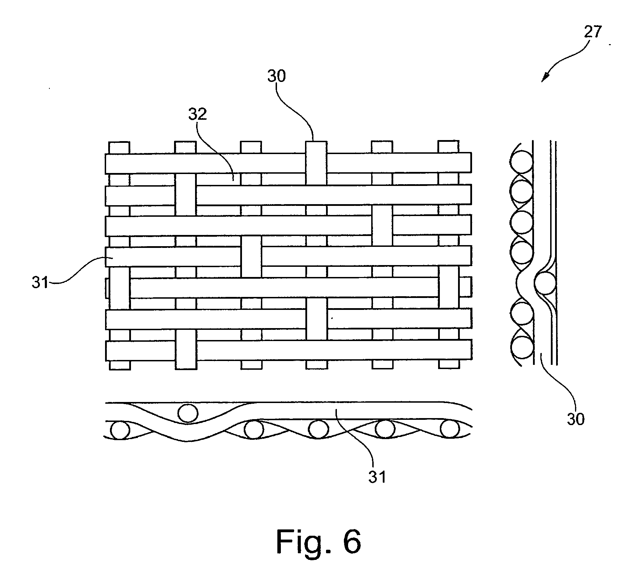

Fig. 6 zeigt in 3 Ansichten den Aufbau einer Wandung 27 aus einem metallischen Vlies nach Art eines 5-Schaft-Körpergewebes (so genanntes "Atlasgewebe"). Dabei durchdringen sich die dickeren Kett-Filamente 30 und die dünneren Schuss-Filamente 31 nur nach vier passierten Filamenten. Dabei werden relativ große Maschen 32 gebildet.

Nur der Vollständigkeit halber sei darauf hingewiesen, dass die hier beschriebene Vorrichtung vielfach verändert werden kann, ohne den erfindungsgemäßen Gedanken zu verlassen. Insbesondere können die Arten der Abgasreinigungsanlagen, Wärmetauscher, Sensoren, Turbolader, etc. entsprechend den Bedingungen der Verbrennungskraftmaschine entsprechend ausgebildet sein.

### Bezugszeichenliste

- 1: Abgasrückführleitung
- 2: Abgasleitung
- 3: Hohlkörper
- 4: Sekundärstruktur
- 5: Innenraum
- 6: Partikelabfangvorrichtung
- 7: Primärform
- 8: Kappe
- 9: Steckringverbindung
- 10: erster mittlerer Querschnitt
- 11: erster vergrößerter Querschnitt
- 12: zweiter mittlerer Querschnitt
- 13: zweiter vergrößerter Querschnitt
- 14: Erhebungen
- 15: Vertiefungen
- 16: Lage
- 17: Erste Hauptrichtung
- 18: Stützlage
- 19: Abgasanlage
- 20: Überlappungsbereich
- 21: zweite Hauptrichtung
- 22: Automobil
- 23: Verbrennungskraftmaschine
- 24: Keramikfilter
- 25: erste Strömungsrichtung
- 26: zweite Strömungsrichtung
- 27: Wandung
- 28: offene Seite
- 29: Schwerkraft
- 30: Kett-Filament
- 31: Schuss-Filament
- 32: Masche

## Patentansprüche

1. Partikelabfangvorrichtung (6) zwischen einer Abgasleitung (2) mit einem Strömungsverlauf in einer ersten Hauptrichtung und einer Abgasrückführleitung (1), wobei die Abgasleitung (2) einen ersten mittleren Querschnitt (10) und einen ersten vergrößerten Querschnitt (11) aufweist, und mindestens ein teilweise durchlässiger Hohlkörper (3) in dem ersten vergrößerten Querschnitt (11) angeordnet ist, wobei der mindestens eine teilweise durchlässige Hohlkörper (3) mit seiner Wandung (27) eine Primärform (7) mit einem Innenraum (5) definiert, der zwei gegenüberliegende offene Seiten (28) hat, und so angeordnet ist, dass dieser axial von einer Seite angeströmt wird,
die Wandung (27) gasdurchlässig ist, wobei als Wandung (27) ein Vlies nach Art eines Siebes verwendet wird, welches eine Dicke zwischen 0,4 Millimeter und 0,5 Millimeter aufweist,
und die Wandung (27) eine die Primärform überlagernde kleinere Sekundärstruktur (4) mit Erhebungen (14) und Vertiefungen (15) aufweist, die in axialer Richtung geradlinig, länglich und über die gesamte axiale Ausdehnung des Hohlkörpers ausgebildet sind und parallel zu der ersten Hauptrichtung der Abgasleitung verlaufen, wobei die Sekundärstruktur (4) eine Abweichung vom Querschnitt der Primärform (7) quer zum Verlauf der Wandung in Umfangsrichtung darstellt,
und wobei die Wandung (27) des teilweise durchlässigen Hohlkörpers (3) die strömungstechnische Grenze zwischen der Abgasströmung der Abgasleitung (2) und der Abgasströmung, die durch die Abgasrückführleitung zurück geführt wird, darstellt.

2. Partikelabfangvorrichtung (6) nach Patentanspruch 1, wobei der mindestens eine teilweise durchlässige Hohlkörper (3) im Bereich des ersten vergrößerten Querschnitts (11) mit Steckringverbindungen (9) an der Abgasleitung (2) befestigt ist, in welche die offenen Seiten (28) des durchlässigen Hohlkörpers (3) direkt formschlüssig eingreifen können.

3. Partikelabfangvorrichtung (6) nach einem der vorhergehenden Patentansprüche, wobei die Wandung (27) des teilweise durchlässigen Hohlkörpers (3) insbesondere mit einem Gewirr, einem Geflecht oder einem gesinterten Material aus metallischen temperaturbeständigen Werkstoffen ausgebaut ist, und weiter aus mindestens einer Lage (16) mit Erhebungen (14) und Vertiefungen (15) gebildet wird, wobei die mindestens eine Lage (16) mit sich selbst einen Überlappungsbereich (20) ausbildet, in dem die Erhebungen (14) und die Vertiefungen (15) formschlüssig ineinander greifen.

4. Partikelabfangvorrichtung (6) nach einem der vorhergehenden Patentansprüche, **dadurch gekennzeichnet, dass** mindestens eine Stützlage (18) vorgesehen ist, die eine der Sekundärstruktur des mindestens einen teilweise durchlässigen Hohlkörpers (3) entsprechende Gestalt hat.

5. Partikelabfangvorrichtung (6) nach einem der vorhergehenden Patentansprüche, **dadurch gekennzeichnet, dass** die Wandung (27) mit Maschen (32) von bis zu 0,3 mm ausgeführt ist.

6. Automobil (22) mit einer Verbrennungskraftmaschine (23) und einer Abgasanlage (19), die mindestens eine Partikelabfangvorrichtung (6) nach einem der vorhergehenden Patentansprüche aufweist, wobei eine erste Strömungsrichtung (25) durch die Abgasrückführleitung (1) zur Verbrennungskraftmaschine (23) existiert und die Partikelabfangvorrichtung (6) so angeordnet ist, dass die erste Strömungsrichtung (25) in der Abgasrückführleitung (1) unmittelbar nach der Partikelabfangvorrichtung (6) der Schwerkraft entgegengesetzt verläuft.

7. Automobil (22) mit einer Verbrennungskraftmaschine (23) und einer Abgasanlage (19), die mindestens eine Partikelabfangvorrichtung (6) nach einem der Patentansprüche 1 bis 5 und mindestens einen Keramikfilter (24) aufweist, wobei eine zweite Strömungsrichtung (26) durch die Abgasleitung (2) weg von der Verbrennungskraftmaschine (23) existiert und mindestens ein Keramikfilter (24) in zweiter Strömungsrichtung (26) vor der Partikelabfangvorrichtung (6) angeordnet ist.

## Claims

1. A particle trap (6) between an exhaust gas line (2) with a direction of flow in a first main direction and an exhaust gas recirculation line (1), wherein the exhaust gas line (2) has a first mean cross section (10) and a first enlarged cross section (11), and at least one partially permeable hollow body (3) is placed in the first enlarged cross section (11), wherein the at least one partially permeable hollow body (3) defines, with its wall (27), a primary shape (7) with an inner space (5) which has two open sides (28) which are opposite to each other and arranged such that there is an axial flow of exhaust gas against the hollow body from one side,
and the wall (27) is permeable to gas wherein a fleece in the manner of a sieve is used as wall (27) which has a thickness between 0.4 millimeters and 0.5 millimeters,
and the wall (27) has a smaller secondary structure (4) which superimposes the primary shape, the secondary structure has elevated portions (14) and depressions (15) which are arranged in axial direction, linearly shaped, of elongated form and over the entire axial length of the hollow boy and which are arranged parallel to the first mean direction of the exhaust gas line, wherein the secondary structure (4) is a deviation of the cross section of the primary shape (7) extending transverse to the direction of the wall in a circumferential direction,
and wherein the wall (27) of the at least partially permeable hollow body (3) a fluidic boundary between the exhaust gas flow in the exhaust gas line (2) and the exhaust gas flow which recirculates through the exhaust gas recirculation line.

2. The particle trap (6) as claimed in claim 1, wherein the at least one partially permeable hollow body (3) is attached in the region of the first enlarged cross section (11) to the exhaust gas line (2) by means of push-in ring connections (9), the open sides (28) of the permeable hollow body (3) are able to engage directly into the push-in ring connections (9) in a positively locking fashion.

3. The particle trap (6) as claimed in one of the preceding claims, wherein the wall (27) of the at least partially permeable hollow body (3) is in particular formed with a mat, a weave or a sintered material from metallic temperature resistant materials and furthermore formed from at least one layer (16) with elevated portions (14) and depressions (15), wherein the at least one layer (16) forms a region (20) which overlaps with itself and in which the elevated portions (14) and the depressions (15) engage in one another in a positively locking fashion.

4. The particle trap (6) as claimed in one of the preceding claims, **characterized in that** at least one support layer (18) is provided which has a shape which corresponds to the secondary structure of the at least one partially permeable hollow body (3).

5. The particle trap (6) as claimed in one of the preceding claims, **characterized in that** the wall (27) is embodied with meshes (32) of up to 0.3 mm.

6. An automobile (22) having an internal combustion engine (23) and an exhaust system (19) which has at least one particle trap (6) as claimed in one of the preceding claims, wherein there is a first flow direction (25) through the exhaust gas recirculation line (1) to the internal combustion engine (23), and the particle trap (6) is arranged in such a way that the first flow direction (25) in the exhaust gas recirculation line (1) directly downstream of the particle trap (6) runs counter to the force of gravity.

7. The automobile (22) having an internal combustion engine (23) and an exhaust system (19) which has at least one particle trap (6) as claimed in one of claims 1 to 5 and at least one ceramic filter (24), wherein there is a second flow direction (26) through the exhaust gas line (2) away from the internal combustion engine (23), and at least one ceramic filter (24) is arranged upstream of the particle trap (6) in the second flow direction (26).

## Revendications

1. Dispositif de piégeage des particules (6) entre une conduite de gaz d'échappement (2) comprenant un passage d'écoulement dans une première direction principale et une conduite de retour des gaz d'échappement (1), la conduite de gaz d'échappement (2) présentant une première section transversale centrale (10) et une première section transversale agrandie (11), et au moins un corps creux (3) partiellement perméable est disposé dans la première section transversale agrandie (11), l'au moins un corps creux (3) partiellement perméable définissant avec sa paroi (27) une forme primaire (7) avec un espace interne (5) qui présente deux côtés (28) ouverts opposés, et étant disposé de telle sorte que celui-ci soit sollicité par l'écoulement axialement depuis un côté,
la paroi (27) étant perméable aux gaz, un non tissé étant utilisé comme paroi (27) sous la forme d'un tamis, lequel non tissé présente une épaisseur comprise entre 0,4 millimètre et 0,5 millimètre,
et la paroi (27) présentant une structure secondaire (4) plus petite superposée à la forme primaire, avec des rehaussements (14) et des renfoncements (15), qui sont réalisés sous forme allongée rectiligne dans la direction axiale et sur toute l'étendue axiale du corps creux et s'étendent parallèlement à la première direction principale de la conduite de gaz d'échappement, la structure secondaire (4) constituant un écart par rapport à la section transversale de la forme primaire (7) transversalement à l'étendue de la paroi dans la direction périphérique,
et la paroi (27) du corps creux (3) partiellement perméable constituant la limite en termes de technique d'écoulement entre l'écoulement de gaz d'échappement de la conduite de gaz d'échappement (2) et l'écoulement de gaz d'échappement qui est ramené par la conduite de retour de gaz d'échappement.

2. Dispositif de piégeage des particules (6) selon la revendication 1, dans lequel l'au moins un corps creux (3) partiellement perméable est fixé dans la région de la première section transversale agrandie (11) avec des connexions à bague enfichables (9) sur la conduite de gaz d'échappement (2), dans laquelle les côtés ouverts (28) du corps creux perméable (3) peuvent venir en prise directement par engagement par correspondance géométrique.

3. Dispositif de piégeage des particules (6) selon l'une quelconque des revendications précédentes, dans lequel la paroi (27) du corps creux (3) partiellement perméable est réalisée notamment avec un enchevêtrement, un tressage ou un matériau fritté en matériaux métalliques résistants à la température, et est en outre formée d'au moins une couche (16) avec des rehaussements (14) et des renfoncements (15), l'au moins une couche (16) constituant avec elle-même une région de chevauchement (20) dans laquelle les rehaussements (14) et les renfoncements (15) s'engagent mutuellement par engagement par correspondance géométrique.

4. Dispositif de piégeage des particules (6) selon l'une quelconque des revendications précédentes, **caractérisé en ce qu'**au moins une couche de support (18) est prévue, laquelle a une forme correspondant à la structure secondaire de l'au moins un corps creux (3) partiellement perméable.

5. Dispositif de piégeage des particules (6) selon l'une quelconque des revendications précédentes, **caractérisé en ce que** la paroi (27) est réalisée avec des mailles (32) d'une taille maximale de 0,3 mm.

6. Automobile (22) comprenant un moteur à combustion interne (23) et une installation de gaz d'échappement (19), qui présente au moins un dispositif de piégeage des particules (6) selon l'une quelconque des revendications précédentes, une première direction d'écoulement (25) existant à travers la conduite de retour de gaz d'échappement (1) jusqu'au moteur à combustion interne (23) et le dispositif de piégeage des particules (6) étant disposé de telle sorte que la première direction d'écoulement (25) s'étende en sens inverse de la force de pesanteur dans la conduite de retour de gaz d'échappement (1) immédiatement après le dispositif de piégeage des particules (6).

7. Automobile (22) comprenant un moteur à combustion interne (23) et une installation de gaz d'échappement (19), qui présente au moins un dispositif de piégeage des particules (6) selon l'une quelconque des revendications 1 à 5 et au moins un filtre céramique (24), une deuxième direction d'écoulement (26) existant à travers la conduite de gaz d'échappement (2) en provenance du moteur à combustion interne (23), et au moins un filtre céramique (24) étant disposé dans la deuxième direction d'écoulement (26) avant le dispositif de piégeage des particules (6).
